# FASCICULE DE BREVET EUROPEEN

(11) **EP 2 583 440 B1**
(45) Date de publication et mention de la délivrance du brevet: **07.03.2018**
(21) Numéro de dépôt: 11735488.6
(22) Date de dépôt: 14.06.2011
(51) Int. Cl.: H04W 4/00, H04L 12/58, H04L 29/06, H04L 29/08, H04L 12/24, B60L 11/18

(54) **PROCEDE DE GESTION D'UN OBJET AU MOYEN D'UNE PASSERELLE DE GESTION UTILISANT UN RESEAU DE TELECOMUNICATIONS**
VERFAHREN ZUR OBJEKTSTEUERUNG DURCH EINEN GATEWAY IN EINEM TELEKOMMUNIKATIONSNETWERK
OBJECT MANAGEMENT METHOD USING A MANAGEMENT GATEWAY IN A COMMUNICATIONS NETWORK

(30) Priorité: 16.06.2010 FR 1054753
(43) Date de publication de la demande: 24.04.2013
(73) Titulaire: Actility, 22300 Lannion (FR)
(72) Inventeur: HERSENT, Olivier, F-78430 Louveciennes (FR)
(74) Mandataire: Cabinet Plasseraud
(86) Numéro de dépôt international: PCT/FR2011/051341
(87) Numéro de publication internationale: WO 2011/157938

(56) Documents cités:
- EP-A2- 2 131 553
- WO-A1-2007/140834
- WO-A1-2008/109684
- WO-A2-2010/094714
- US-A1- 2008 040 223
- US-A1- 2009 157 835
- US-A1- 2009 207 757
- US-A1- 2010 141 205
- WU ZHANG ET AL: "Architecture Design of Embedded Home IMS Gateway based on Convergence of IMS and Home Network", EMBEDDED SOFTWARE AND SYSTEMS, 2008. ICESS '08. INTERNATIONAL CONFERENCE ON, IEEE, PISCATAWAY, NJ, USA, 29 juillet 2008 (2008-07-29), pages 271-276, XP031303462, ISBN: 978-0-7695-3287-5

## Description

La présente invention concerne la gestion d'objets par le biais d'une passerelle de gestion reliée à un réseau de télécommunications, et s'applique en particulier dans le domaine de la gestion de ressources énergétiques telles que la ressource électrique.

Dans le domaine des télécommunications, les nouvelles applications sont habituellement d'abord implémentées sous un format propriétaire (comme par exemple les premiers systèmes de voix sur IP). Dans un second temps, des standards sont développés portant sur des protocoles spécifiquement conçus pour ces nouvelles applications (e.g. les protocoles H.323 et SIP pour les systèmes de voix sur IP). Enfin, quand le développement des nouvelles applications s'étend sur une plus large échelle, typiquement dans un environnement international, d'autres standards sont développés portant sur l'architecture de communication. De tels standards décrivent comment les fonctions supportant les nouvelles applications sont distribuées et organisées (comme par exemple le standard 3GPP IMS pour la voix sur IP et les sessions multimédias).

En ce qui concerne le domaine de la communication d'objets à objets, la situation actuelle est la suivante :
- En ce qui concerne les réseaux locaux de contrôle et de senseurs, divers standards de protocole existent actuellement, y compris des standards d'architectures locales. On peut citer comme exemple, dans le domaine de la domotique, des protocoles comme BACnet, Zigbee, LON ou Zwave.
- En ce qui concerne les réseaux de senseurs distribués à grande échelle, seuls des standards au niveau du protocole existent, d'autres (COAP) sont émergents. La collecte de données de mesure par le biais de systèmes de communication centralisés, voire le contrôle à distance d'un équipement de consommateur, existent aussi depuis des années.

Plus récemment, le standard IP a été utilisé comme protocole de base de communication entre objets et serveurs de contrôle, et des protocoles basés sur le standard IP ont été développés pour des fonctions telles que le contrôle de police.

Cependant, tous les protocoles déjà proposés ne font que simplement étendre la portée des réseaux locaux d'objet en encapsulant des protocoles utilisés dans ces réseaux locaux d'objets (tels que Zwabe ou Zigbee) dans le protocole IP. Cette solution permet à des objets de communiquer en dehors de leur environnement local sur un réseau de type IP, mais ne constitue pas une architecture standardisée de niveau système en tant que telle.

Le document EP 2 131 553 décrit un terminal mobile de télécommunications permettant l'obtention de données de contexte liées à l'environnement d'un véhicule automobile.

En l'absence d'une architecture standardisée de niveau système, l'art antérieur indiqué ci-dessus ne permet d'offrir les fonctionnalités suivantes :
- Offrir la maîtrise complète des procédés permettant à des objets de différents fabricants de se connecter à une infrastructure de gestion et de bénéficier des services fournis par une telle infrastructure de gestion (services comme l'authentification centralisée, le comptage et la facturation, la communication entre réseaux hétérogènes, la sécurisation et le filtrage des échanges, la supervision, etc.).
- Offrir la possibilité à des objets connus et authentifiés par un fournisseur de service A de se connecter à une infrastructure fournie par un fournisseur de service B, de façon à bénéficier de services offerts par le fournisseur de service A avec les ressources offertes par le fournisseur de service B (par exemple dans un cas d'itinérance ou « roaming »).
- La mise en service simultanée d'applications réalisées par différents concepteurs, bénéficiant des services mutualisés offerts par l'architecture système sous-jacente, et exposant leur services aux objets connectés au réseau et aux autres applications.
- Permettre à des objets implémentant différents protocoles locaux d'être interconnectés par le biais de l'architecture centrale.
- Permettre à des serveurs applicatifs de fournir des services à des objets connectés indépendamment du type de protocole de réseau local supporté.
- Fournir des mécanismes de sécurité basée sur des standards réseau afin de permettre aux possesseurs d'objets d'exposer de manière sélective les données fournies par ces objets à d'autres objets (indépendamment de leur protocoles locaux natifs) ou d'autres applications, par exemple fournies par différents distributeurs.

La présente invention, définie par la revendication de procédé 1 et la revendication de dispositif 15, a pour objet de remédier à ces inconvénients.

Elle propose à cet effet un procédé de gestion d'un objet par une passerelle de gestion communiquant avec une architecture système présente sur un réseau de télécommunications offrant des fonctionnalités d'enregistrement d'objets, de routage de messages et de gestion de la bande passante, le procédé comportant l'enregistrement de l'objet auprès de l'architecture système par l'intermédiaire de la passerelle de gestion, en utilisant ladite fonctionnalité d'enregistrement, et le contrôle d'une ressource énergétique délivrée et/ou reçue par l'objet au moyen de cette passerelle de gestion, en utilisant ces fonctionnalités de routage de messages et de gestion de la bande passante.

Avantageusement, l'enregistrement de l'objet est effectué au moyen d'un identifiant comprenant un identificateur unique au sein d'un domaine, et un identificateur de domaine globalement unique, en particulier une adresse URI.

Dans un mode de réalisation avantageux où le réseau de télécommunications offre en outre une fonctionnalité de contrôle d'admission, le contrôle du paramètre associé à l'objet utilise en outre ladite fonctionnalité de contrôle d'admission, ce qui permet de gérer le paramètre associé à l'objet avec des principes de gestion utilisés dans les télécommunications.

Dans un mode de réalisation avantageux où le réseau de télécommunications offre en outre une fonctionnalité d'authentification, l'enregistrement de l'objet auprès de l'architecture système utilise en outre ladite fonctionnalité d'authentification, ce qui permet de gérer les objets de façon sécurisée.

Dans un mode de réalisation avantageux où le réseau de télécommunications offre en outre une fonctionnalité d'itinérance, le contrôle du paramètre associé à l'objet utilise en outre ladite fonctionnalité d'itinérance, ce qui permet de gérer des objets amenés à se déplacer sous la couverture de différents réseaux, y compris au niveau de la fourniture d'énergie électrique.

Dans un mode particulier de réalisation où l'objet est un véhicule électrique, la passerelle de gestion est installée dans ledit véhicule électrique et est agencée pour coopérer avec une station de recharge électrique afin de gérer l'alimentation électrique dudit véhicule électrique.

Dans un autre mode particulier de réalisation où l'objet est un véhicule électrique, la passerelle de gestion est installée dans une station de charge et agencée pour gérer l'alimentation électrique dudit véhicule électrique au moyen de la station de charge.

Dans un mode de réalisation particulièrement avantageux, le réseau de télécommunications présente une architecture système IMS, ce qui permet de bénéficier de toutes les fonctionnalités offertes intrinsèquement par ce type d'architecture.

Dans ce mode de réalisation particulièrement avantageux, la transmission d'au moins une donnée reçue de l'objet enregistré vers l'architecture système présente sur le réseau de télécommunications au moyen du protocole SIP.

En particulier, la donnée reçue de l'objet est encapsulée dans le champ de données et/ou dans l'entête d'une trame organisée selon le protocole SIP.

Avantageusement, la donnée reçue de l'objet à gérer est indicative d'un besoin en alimentation électrique.

De façon avantageuse, le procédé comporte l'envoi par la passerelle de gestion d'un message de signalisation d'un besoin énergétique à un sous-système de contrôle d'admission énergétique.

Dans un mode de réalisation, la passerelle de gestion est agencée pour mettre en oeuvre une politique énergétique prédéfinie.

De manière avantageuse, une donnée reçue du dispositif enregistré est traduite d'un premier protocole vers un deuxième protocole avant d'être transmise vers le réseau de télécommunications.

La présente invention propose également une passerelle de gestion d'un objet comprenant un module d'interface physique apte à communiquer avec l'objet et un module d'interface réseau apte à communiquer avec une architecture système présente sur un réseau de télécommunications, caractérisé en ce que ladite passerelle de gestion est apte à mettre en oeuvre le procédé de gestion d'un objet décrit ci-avant.

Le procédé de gestion et la passerelle de gestion, objets de l'invention, seront mieux compris à la lecture de la description et à l'observation des dessins ci-après dans lesquels :
- la figure 1 illustre un système comprenant une passerelle de gestion ONG selon la présente invention ;
- la figure 2 illustre un mode de réalisation du procédé de gestion de la présente invention ;
- la figure 3 illustre un mode de réalisation d'un système adapté au contexte de la gestion de ressources énergétiques utilisant l'architecture système IMS ;
- la figure 4 illustre les étapes d'un mode de réalisation du procédé de gestion correspondant au système adapté au contexte de la gestion de ressources énergétiques, dans le cadre de la gestion de la génération d'énergie électrique ; et
- la figure 5 illustre les étapes d'un autre mode de réalisation du procédé de gestion correspondant au système adapté au contexte de la gestion de ressources énergétiques, dans le cadre de la gestion de la consommation d'énergie électrique.

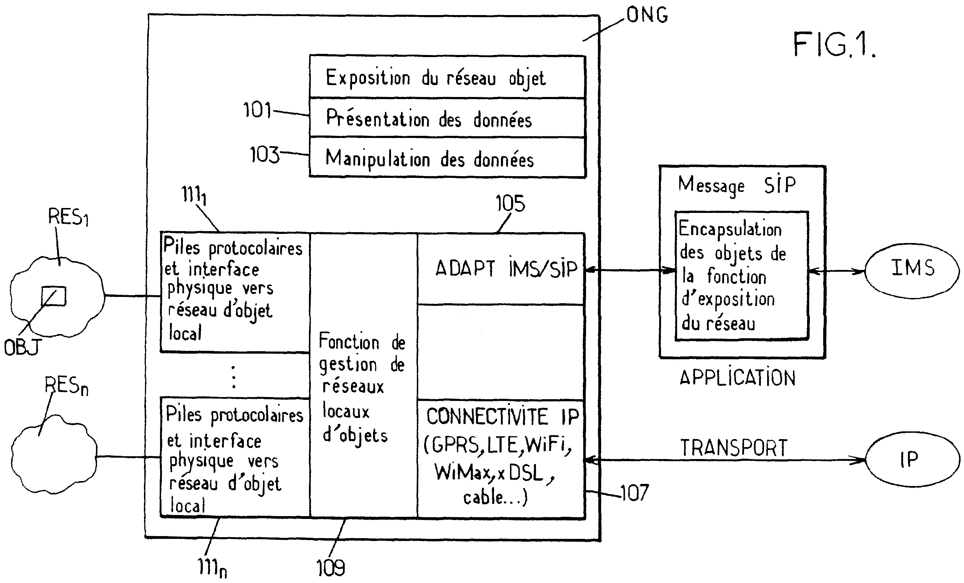

La **figure 1** illustre un système comprenant une passerelle de gestion ONG selon la présente invention.

Cette passerelle de gestion ONG est apte à gérer au moins un paramètre associé à un objet à gérer. On entend ici par objet un dispositif présentant ou utilisant certains paramètres pouvant être contrôlés ou lus.

A titre d'exemple, on peut citer :
- Tous types de capteurs (température, humidité, mouvement, interfaces de lecture de compteurs, etc.), à interface filaire (e.g. courant porteur) ou radio.
- Tous types d'actuateurs (interrupteurs, relais, serrures électriques, gestionnaires de fil pilote), à interface filaire (e.g. courant porteur) ou radio.
- Des appareils communicants fixes ou mobiles (GPS, alarmes, surveillance médicale, centrales de gestion d'énergie, relais radio de suivi de véhicules ou de colis)
- Des bornes de rechargement de batteries ou de véhicules électriques, lorsqu'elles disposent d'interfaces de communication pour superviser et contrôler le chargement.
- Des véhicules électriques rechargeables, lorsqu'ils disposent d'interfaces de communication pour superviser et contrôler le chargement.
- Des moyens de production d'énergie décentralisés (e.g. éolien, solaire), lorsqu'ils disposent d'interfaces de communication permettant de superviser et de contrôler la puissance fournie au réseau, ainsi éventuellement que d'autres paramètres utiles à leur maintenance.

Cette passerelle de gestion ONG comprend les divers modules fonctionnels suivants, permettant d'une part la communication avec au moins un objet à gérer, par exemple par interconnexion avec un ou plusieurs réseau locaux d'objets RES₁,...,RESₙ, auquel appartient cet objet, et d'autre part, l'interconnexion avec une architecture système du réseau de télécommunications (qui peut être avantageusement une architecture de type IMS) afin d'utiliser une ou plusieurs fonctionnalités de cette architecture pour gérer l'objet:
- Un module de présentation des données (module 101) : ce module traduit le modèle de données spécifique au réseau local d'objets (e.g. noeuds et clusters ZigBee) dans une syntaxe (e.g. XML) et un modèle de données adapté à l'architecture centrale. Cette syntaxe et ce modèle de données doivent être suffisamment souples pour permettre de représenter les divers standards de réseaux locaux d'objets existants, et sont un élément clé permettant de faciliter l'interopérabilité de réseaux d'objets hétérogènes à travers l'infrastructure centrale. Ce module de présentation des données rend également accessible aux réseaux locaux RESx des objets et serveurs d'applications non locaux (hébergés ou interconnectés sur la plate-forme système centrale), en les présentant selon le modèle de données adapté au réseau local.
- Un module de manipulation des données (module 103): ce module offre un ensemble de primitives permettant de manipuler le réseau local d'objets (e.g. écrire ou lire des données), de configurer des services de notification d'événements et plus généralement de mettre à disposition de l'architecture centrale tous services permettant d'accéder aux fonctionnalités des réseaux d'objets connectés, et aux objets connectés d'interagir avec des objets et serveurs d'applications non locaux. Typiquement les primitives pourront être décrites en XML/WSDL, et s'appliquer aux objets du réseau tels que représentés par la couche de présentation des données (e.g. objet XML). Ces primitives peuvent comprendre des primitives indépendantes des protocoles locaux (e.g. primitives de lecture ou d'écriture) et éventuellement une exposition des primitives de contrôle natives des protocoles locaux
- Une interface d'adaptation à IMS/SIP (module 105). Ce module d'adaptation (« protocol binding » en anglais) permet d'exposer la couche de présentation des données et la couche de manipulation des données à travers un réseau IMS/SIP. Elle peut également assurer une interface entre ces couches et des mécanismes natifs de IMS/SIP : par exemple l'enregistrement d'objets du réseau local sur les registres de la plate-forme IMS, la publication d'état par le biais de messages SIP PUBLISH ou NOTIFY, la souscription aux notifications par le biais de messages SUBSCRIBE, etc.
- Un module de connectivité, par exemple IP (module 107), qui permet l'interconnexion directe ou indirecte de la passerelle de gestion ONG avec un réseau de type internet, utilisant le protocole IP, par le biais d'une couche de transport. Un exemple d'une connexion indirecte pourrait être l'encapsulation de messages dans les SMS du réseau GSM/UMTS/3G.
- Un module de gestion de réseaux locaux d'objets (module 109), assurant notamment la connectivité avec les noeuds des réseaux d'objets et les échanges de données, ainsi que la sécurité au niveau local. Ce pourra être, par exemple, un coordinateur ZigBee (ZC).
- Des interfaces protocolaires et physiques (modules 111₁...111ₙ) associés respectivement à l'un des réseaux locaux d'objets locaux RES₁,...,RESₙ auxquels appartient l'objet à gérer.

Les différents modules fonctionnels et interfaces décrit ci-dessus peuvent prendre la forme de modules logiciels implémentés au sein d'un serveur correspondant à la passerelle de gestion, par exemple.

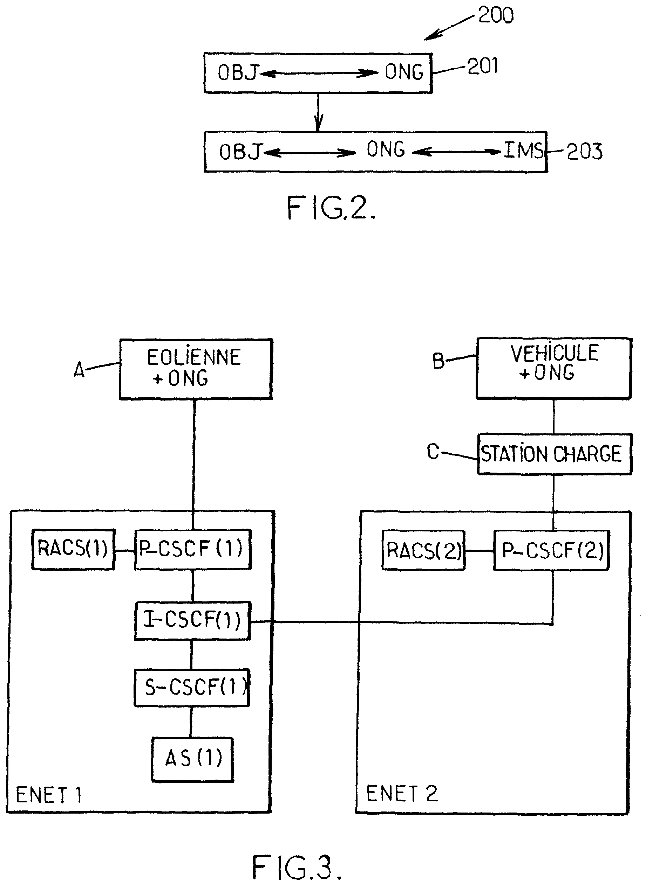

La **figure 2** illustre un mode de réalisation du procédé 200 de gestion d'un objet selon un mode de réalisation de la présente invention.

Ce procédé de gestion comprend une première étape 201 d'enregistrement de l'objet auprès du réseau de télécommunications par l'intermédiaire de la passerelle de gestion ONG utilisant une fonctionnalité d'enregistrement associée à l'architecture système (e.g. IMS) du réseau de télécommunications.

Lorsque l'objet appartient à un réseau local d'objets, le nom de l'objet enregistré sur le réseau comprend avantageusement au moins un identifiant du domaine administratif de l'objet, et un identifiant unique de l'objet au sein du domaine administratif.

Cet enregistrement est fait au moyen d'une fonctionnalité d'enregistrement déjà offerte sur le réseau de télécommunications et ne nécessite donc pas de créer une nouvelle fonctionnalité à ce niveau.

Lorsque l'objet appartient lui-même à un réseau local d'objets, la passerelle de gestion ONG utilise une de ses interfaces de connexion connecté au réseau local d'objets spécifique de l'objet à gérer, en utilisant par exemple des protocoles de type ZigBee, 6lowPan, Z-wave, Lon ou autres, pour obtenir un catalogue des objets présents sur ces réseaux.

La passerelle de gestion ONG utilise une interconnexion avec le protocole IP, et peut présenter des interfaces de gestion locales par exemple de type http.

La passerelle de gestion ONG effectue ainsi un enregistrement par procuration (« proxy registration » en anglais) de l'objet à gérer auprès de l'architecture système du réseau de télécommunications.

De façon avantageuse, l'enregistrement de l'objet est effectué au moyen d'un identifiant comprenant un identificateur unique au sein d'un domaine, et un identificateur de domaine globalement unique, en particulier une adresse URI. Ainsi, dans un cas illustratif où un objet thermomètre utilise le protocole de réseau local Z-wave avec un identifiant ID 12, celui peut être reconnu sur le réseau de télécommunications par un URI de type z12@site1.example.net au moyen d'un tel enregistrement par procuration. z12 est l'identifiant unique de l'objet au sein du domaine administratif sitel.example.net.

Ceci permet aux autres serveurs du réseau de télécommunications de connaître l'existence de l'objet enregistré et d'interagir avec cet objet en utilisant une sémantique qui lui est propre, via la passerelle de gestion ONG.

Une fois l'objet enregistré auprès de l'architecture système du réseau de télécommunications par l'intermédiaire de la passerelle de gestion ONG, une étape de contrôle 203 d'un paramètre associé à l'objet par ladite passerelle de gestion est effectuée, au moyen d'au moins une fonctionnalité associée à l'architecture système du réseau de télécommunications, utilisant une fonctionnalité de routage de messages offerte par le réseau de télécommunications.

Lorsque le réseau de télécommunications offre en outre une fonctionnalité d'authentification, l'étape 201 d'enregistrement de l'objet auprès de l'architecture système du réseau de télécommunications utilise avantageusement cette fonctionnalité d'authentification.

Cette fonction centralisée d'authentification permet aux développeurs d'applications de ne pas avoir à se soucier de vérifier l'identité des objets accessibles, ni de leur légitimité à accéder aux ressources du système, ce contrôle étant une des fonctions centralisées de l'architecture système, y compris éventuellement dans les cas d'itinérance.

Par ailleurs, lorsque le réseau de télécommunications offre en outre une fonctionnalité d'itinérance, l'étape 203 de contrôle du paramètre associé à l'objet utilise en outre cette fonctionnalité d'itinérance, afin de permettre la gestion du paramètre associé à l'objet dans des réseaux hôtes différents de son réseau d'origine.

L'architecture du système permet en outre à de multiples applications d'accéder, en lecture ou en écriture, aux paramètres des objets enregistrés. En effet, un objet n'est pas enregistré auprès d'un serveur d'application en particulier, mais auprès de la fonction d'enregistrement de l'architecture système qui en offre l'accès à toutes les applications hébergées par le système et à tous les objets interconnectés autorisés à le faire (à travers leur propre ONG), même ceux utilisant des protocoles natifs (au niveau du réseau local d'objets) différents.

Enfin, l'enregistrement étant un soft-state, c'est-à-dire étant régulièrement rafraichi par l'ONG, le serveur d'enregistrement de l'architecture offre également à toutes les applications du système de s'abonner aux évènements d'enregistrement/désenregistrement (explicite ou consécutif à une absence de renouvellement d'enregistrement) des objets qui les intéressent. Toutes les applications peuvent ainsi superviser la présence effective des objets sur le réseau, sans pour autant devoir mettre en place, chacun, un mécanisme de contrôle périodique (« polling »). Le mécanisme de polling centralisé permet également de maintenir ouvertes les associations (« pinhole ») des routeurs/pare-feu effectuant des traductions d'adresses IP (« NAT » ou « NAPT ») situés entre l'ONG et l'architecture système, et ainsi de permettre l'envoi de messages par la plate-forme système (et donc toutes application ou objet faisant partie du système) vers l'ONG, même lorsque cette dernière est située derrière un routeur NAT ou un pare-feu.Dans un mode de réalisation particulier, l'architecture système du réseau de télécommunications auquel est connectée la passerelle de gestion ONG est de type IMS (pour IP Multimedia Subsystem en anglais) permettant la gestion de sessions multimédias.

Une telle architecture système IMS est avantageuse en ce sens qu'elle présente de façon inhérente, entre autres, les fonctionnalités suivantes pouvant être utilisées lors de l'enregistrement d'un objet et/ou le contrôle d'un paramètre d'un objet à gérer :
- Enregistrement et supervision des objets
- Authentification et filtrage des messages
- Contrôle d'admission
- Routage des messages en fonction d'un identifiant de niveau applicatif distinct des identifiants réseau (typiquement URI), d'objet à objet, d'objet à application.
- Routage de message et interconnexion fonctionnelle de domaine administratif à d'autres domaines administratifs (itinérance)
- Mise en relation de serveurs d'applicatifs et d'objets

Dans un tel cas de figure, la passerelle de gestion ONG se comporte comme un agent utilisateur SIP (pour Session Initiation Protocol, protocole de session multimédia tel que défini par RFC 3265) et utilise une sémantique additionnelle définie dans les spécifications du standard 3GPP pour les équipements d'utilisateur et dans les spécifications du standard TISPAN pour les passerelles de réseau de clients.

Chaque passerelle de gestion ONG pourra utiliser les primitives REGISTER pour se déclarer ainsi que déclarer les objets des réseaux d'objets qu'elle gère. Dans un mode de réalisation alternatif, l'objet thermomètre est déclaré par l'ONG au réseau IMS par le biais d'une notification de mise à jour du modèle de données du réseau d'objet (message PUBLISH signalant qu'il y a un nouvel objet thermomètre dans le modèle de données du réseau d'objets).

Dans ce mode de réalisation particulier utilisant l'IMS, la présente invention permet l'utilisation des fonctionnalités offertes par l'architecture système de type IMS à la gestion d'un ou plusieurs paramètre(s) d'un objet. Par ailleurs, une sémantique propre à cette architecture de type IMS, par exemple par le biais du protocole SIP, peut être employée pour que les serveurs du réseau de télécommunications communiquent avec l'objet enregistré.

Dans un mode de réalisation avantageux, la sémantique utilisée dans les protocoles de réseau locaux d'objets est mise en correspondance avec la sémantique utilisée dans le protocole de transmission employé dans le réseau de télécommunications. Ainsi, dans l'exemple illustratif d'un architecture IMS où le protocole SIP est utilisé, la sémantique utilisée dans les protocoles de réseau locaux d'objets est mise en correspondance avec le champ de données de messages SIP standards.

Pour ce faire, dans un mode particulier de réalisation, le message binaire servant à la gestion de l'objet dans le réseau local objet est encapsulé tel quel dans le champ de données d'un message SIP.

Dans un autre mode de réalisation avantageux, la passerelle de gestion ONG peut traduire chaque sémantique du protocole du réseau local objet gérant l'objet dans une syntaxe de contrôle d'objet ne dépendant d'aucun protocole en particulier.

Ceci est possible grâce à l'enregistrement de l'objet à gérer auprès du réseau de télécommunications, car un tel objet possède une adresse valable sur l'ensemble du réseau IMS indépendamment du protocole natif gérant localement cet objet.

Une telle adresse peut être utilisée en tant qu'adresse de destination protocolairement agnostique pour des notifications, des souscriptions à des événements ou d'autres messages d'objet-à-objet.

La mise en correspondance des données primitives d'un protocole de réseau local objet dans un modèle de langage descriptif de service web compatible avec le protocole SIP, sur une infrastructure IMS, offre de multiples avantages :
- Des objets peuvent ainsi communiquer entre eux, indépendamment de leurs protocoles natifs de gestion.
- Des serveurs applicatifs peuvent être programmés d'une façon agnostique au type de réseau d'objet, et accéder à tous les services offerts par les protocoles locaux de gestion d'objet natifs.
- De multiples serveurs applicatifs, implémentant des fonctionnalités différentes venant par exemple de fournisseurs distincts, peuvent interagir sur le même objet. Par exemple, on peut réaliser la mise en correspondance de valeurs de température mesurées par un senseur avec une source d'événement SIP (RFC 3265). Divers serveurs applicatifs peuvent alors accéder simultanément aux mêmes données fournies par le senseur, par souscription à des événements en température exposés par le senseur, et recevoir les notifications désirées au travers de messages de notification SIP ultérieurs. Une telle caractéristique permet un modèle de gestion d'applications d'objet qui soit hébergé sur le réseau.
- Un réseau avec architecture IMS fournit des mécanismes de sécurité réseau pour la souscription à des événements (modèle publication/notification) qui fournit un cadre de sécurité pour des notifications entre objets actuellement non disponible dans la plupart des solution de gestion d'objets locales.
- L'architecture IMS fournit des fonctionnalités standard d'enregistrement, d'interrogation, d'authentification, entre autres qui permettent de soulager les serveurs applicatifs de gestion d'objets de certaines tâches extrêmement gourmandes en ressources. A titre d'exemple, un réseau d'un million d'objets à gérer dont la connectivité et la réactivité doivent être estimées par le fournisseur de service toutes les heures requiert un minimum de 600 messages par seconde. L'architecture système IMS répartit cette charge sur les serveurs proxy (P-CSCF).
- L'architecture système IMS, conçue pour assurer un service de communication mobile mondial, offre une infrastructure de gestion des terminaux connectés en dehors de leur réseau d'origine (par « roaming »). Ce modèle système particulièrement complexe permet :
   ∘ Au réseau hôte, de localiser le réseau d'origine du terminal connecté
   ∘ Au réseau d'origine, de continuer à contrôler et offrir des services au terminal quel que soit son réseau hôte
   ∘ A l'objet géré, de bénéficier des ressources du réseau hôte sous le contrôle du réseau d'origine.
   ∘ A l'ensemble des réseaux, hôte et d'origine, d'établir une facturation des services proposés.

Dans un cas particulier où l'objet à gérer demande une ressource, comme par exemple de la bande passante ou de la puissance électrique, l'étape 203 de contrôle du paramètre associé à l'objet utilise en outre avantageusement une fonctionnalité de contrôle d'admission offerte par le réseau de télécommunications.

Un tel contrôle d'admission est particulièrement avantageux pour les raisons suivantes :
- Les réseaux de distribution (que ce soit d'énergie ou de bande passante pour les télécommunications) sont dimensionnés pour que les besoins des utilisateurs finaux soient satisfaits, en quantité et en qualité. Or, la demande étant aléatoire (branchement de voitures, transmission de fichiers), la probabilité d'une demande très forte en certains endroits du réseau est non nulle.
- En l'absence de contrôle d'admission, ce qui est le cas actuel des réseaux de distribution d'électricité, le dimensionnement des réseaux doit tenir compte de fortes pointes (ce qui implique un coût important) et même dans ces conditions, les conditions de pointes extrêmes s'accompagnent d'une dégradation du service fourni (par exemple en termes de stabilité de la tension, de la fréquence, délestages) ne tenant pas compte du niveau de besoin de qualité des usagers.
- Le contrôle d'admission permet de contrôler la demande, en refusant sélectivement ou en déplaçant les demandes qui ne peuvent être satisfaites, ou celles qui sont non prioritaires : ce refus sélectif permet de mieux stabiliser et maîtriser la qualité de service du réseau de distribution, et de réduire les coûts du réseau en éliminant les pointes extrêmes, tout en servant avec une disponibilité accrue les usagers prioritaires.

La **figure 3** illustre un mode de réalisation d'un système adapté au contexte de la gestion de ressources énergétiques illustrant les avantages apportés par l'utilisation de l'architecture système IMS.

Sur cette figure 3, dans un réseau électrique d'origine dénommé ENET1, au moins une (ou plusieurs) éolienne A faisant office d'objet à gérer est connectée par le biais d'une passerelle de gestion ONG au module P-CSCF (1) d'accès au réseau IMS, auprès duquel différentes passerelles modifiées peuvent s'enregistrent. Des modules RACS (1), I-CSCF (1), S-CSCF (1) et AS(1), similaires à ceux utilisés dans une architecture IMS, sont également présents dans le réseau électrique d'origine dénommé ENET1.

Le module I-CSCF(1) du réseau ENET1 est connecté au module P-CSCF (2) d'un réseau électrique hôte ENET2, qui peut également comprendre un module RACS (2) connecté au module P-CSCF(2).

Ce module P-CSCF(2) est connecté à une station de charge 2, qui peut permettre la recharge électrique d'un véhicule électrique 1 disposant d'une passerelle de gestion ONG embarquée, celle-ci étant apte à s'occuper de la gestion énergétique du véhicule électrique 1.

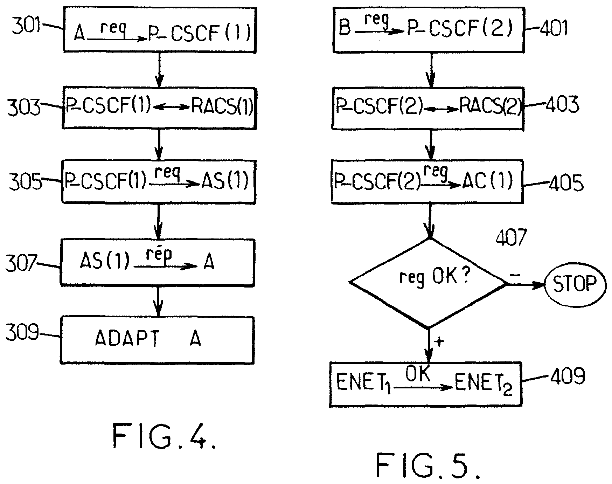

La **figure 4** illustre les étapes d'un mode de réalisation du procédé de gestion correspondant au système adapté au contexte de la gestion de ressources énergétiques illustré sur la figure 3, notamment dans le cadre de la gestion de la génération d'énergie électrique.

Dans ce procédé de gestion, l'éolienne A transmet le biais de la passerelle de gestion ONG, par exemple lors d'une rafale de vent, une requête req d'autorisation d'injection d'énergie électrique sur le réseau (étape 301).

Le module P-CSCF (1) reçoit cette requête req et communique (étape 303) avec le sous-système RACS (1) afin que ce dernier effectue le contrôle de l'admissibilité de cette requête, au vu des flux actuellement présents sur le réseau. Le module RACS (1) peut également éventuellement réduire la demande d'injection d'énergie, par exemple dans le cas d'une situation de fort vent et de fort ensoleillement sur toute une région créant un excès de production d'énergies renouvelables par rapport aux capacités du réseau de distribution et de transport d'électricité.

Si cette requête est jugée admissible par le sous-système RACS(1), le module P-CSCF (1) transmet (étape 305) la requête, éventuellement réduite, vers le module I-CSCF (1) et le module S-CSCF (1), qui routent cette requête vers le serveur d'application AS (1) assurant la gestion applicative de l'éolienne.

Ce serveur AS(1) peut éventuellement modifier la requête selon des critères administratifs et génère une réponse rép à cette requête.

La réponse rép à la requête est alors propagée en sens inverse (étape 307) vers la passerelle de gestion ONG de l'éolienne A, le RACS(1) met à jour sa base de données de flux, et suite à la réception de la réponse, l'éolienne A s'adapte à l'autorisation reçue en ajustant le pas des pales (étape 309).

La **figure 5** illustre les étapes d'un autre mode de réalisation du procédé de gestion correspondant au système adapté au contexte de la gestion de ressources énergétiques illustré sur la figure 3, notamment dans le cadre de la consommation d'énergie électrique.

Dans ce mode de réalisation, un véhicule électrique B, abonné auprès du réseau origine ENET1, se branche sur une station de charge C associée au réseau hôte ENET2.

Ainsi qu'illustré à la figure 3, une passerelle de gestion ONG telle que décrite ci-avant est embarquée à bord du véhicule B et envoie (étape 401) une requête d'autorisation de rechargement reg transitant par la station de charge C, qui la propage au module P-CSCF (2) du réseau hôte ENET2.

Le module P-CSCF (2) communique alors avec le sous-système RACS (2) du réseau hôte ENET2 afin de vérifier les disponibilités du réseau de distribution d'énergie hôte. Si de nombreuses voitures sont connectées simultanément, la demande est éventuellement réduite en fonction des capacités de transport d'électricité locales.

Après ce contrôle, la requête d'autorisation de rechargement reg est transmise (étape 405) au serveur d'application AS(1) du réseau d'origine ENET1.

Suite à la réception de cette requête d'autorisation de rechargement, le serveur d'application AS peut modifier cette requête selon des critères administratifs. Il peut ainsi la rejeter si le véhicule n'est pas abonné à l'itinérance en rechargement, ou il peut en modifier le niveau de priorité.

Si le serveur d'application AS juge acceptable cette requête d'autorisation de rechargement (étape 407), il donne alors l'autorisation, au réseau hôte ENET2, de procéder au rechargement électrique du véhicule (étape 409), avec des paramètres éventuellement réduits (priorité d'admission, courant de charge, etc.).

Ainsi l'autorisation technique des paramètres de charge (contrôle d'admission technique) est effectué dans le réseau hôte ENET2, par le sous-système RACS (2) hôte, en fonction de sa connaissance des flux du réseau hôte, tandis que l'autorisation administrative (le véhicule est-il abonné à un service d'itinérance ? Au service de charge rapide ? Est-il autorisé à se connecter au réseau hôte ?) est effectuée par le ou les serveur(s) d'application AS du réseau d'origine ENET1, avec lequel le propriétaire du véhicule a une relation administrative (typiquement, celui par lequel il est abonné au service).

La découverte et le routage des messages du véhicule vers le réseau hôte est permise par la structure de nommage des objets de l'architecture système lors de leur enregistrement. Les messages provenant de voitureX@domaineY sont routés vers le I-CSCF du domaine Y, au moyen (dans l'architecture IMS) des fonctionnalités de résolution de noms de domaine vers adresses réseau DNS des réseaux IP. L'IMS s'assure que tous les serveurs intermédiaires, e.g. P-CSCF(2), ajoutent leur propres identifiants au cours de l'acheminement du message. Les réponses sont routées du domaine d'origine vers le véhicule en sens inverse, en utilisant cette liste des serveurs intermédiaires.

Ce genre de systèmes permet de répondre aux défis posés par l'utilisation croissante des sources d'énergie renouvelables (qui rendent la production d'électricité moins prédictible) et par l'introduction prévue de stations de recharge pour les véhicules électriques vont créer des contraintes supplémentaires sur les réseaux de distribution électrique.

Ces contraintes supplémentaires nécessiteront l'introduction d'une infrastructure de gestion de politique énergétique sophistiquée pour les réseaux de distribution électrique.

Ainsi, dans un mode particulier de réalisation, la passerelle de gestion ONG selon la présente invention est comprise au sein d'un véhicule électrique rechargeable. Dans un autre mode particulier de réalisation, la passerelle de gestion ONG selon la présente invention est comprise dans la station de recharge elle-même.

Dans le mode particulier de réalisation où la passerelle de réseau selon la présente invention est comprise dans la station de recharge elle-même, l'objet s'enregistrant auprès de la passerelle correspond à un véhicule rechargeable désireux de se connecter à la station de recharge pour se recharger électriquement.

Pour ce faire, le véhicule électrique peut utiliser un mécanisme d'authentification pour communiquer avec la passerelle de réseau de la station de charge, par le biais d'un protocole de réseau local.

La passerelle de réseau de la station de charge traduit alors l'information reçue du véhicule électrique selon une sémantique adaptée au réseau de télécommunications auquel appartient la passerelle de réseau, en adaptant notamment les identifiants reçus au format (identifiant unique)@domaine pour les besoins de l'étape d'enregistrement.

Ainsi, si le réseau de télécommunications auquel appartient la passerelle de réseau présente une architecture de type IMS, la passerelle de réseau de la station de charge traduit l'information reçue du véhicule électrique selon une sémantique adaptée à cette architecture IMS. En particulier, la passerelle de réseau peut encapsuler l'information reçue dans un message d'enregistrement selon le protocole SIP.

Le fait d'utiliser une passerelle de réseau connecté à une architecture IMS est particulièrement avantageux dans le cadre du rechargement de véhicules électriques, notamment par le fait que cela permet d'utiliser la fonctionnalité d'itinérance (dite « roaming » en anglais) offerte par une telle architecture IMS, ce qui est particulièrement adapté au cas des véhicules rechargeables qui ne sont pas amenés à se recharger systématiquement à la même borne de recharge électrique.

Cette fonctionnalité de « roaming » peut être implémentée à différents niveaux dans une architecture IMS. En particulier, cette fonctionnalité de « roaming » peut être employée au niveau de la signalisation seulement, ce qui permet à un utilisateur visiteur (par exemple une voiture) d'échanger des messages de signalisation avec son réseau d'origine. Un tel mode de « roaming » est également particulièrement adapté à des applications de type télémaintenance.

Dans un mode de réalisation particulier permettant à l'utilisateur d'utiliser les ressources d'un réseau de communication, les standards 3GPP et TISPAN associés à l'architecture IMS définissent un sous-système de contrôle de politique et de charge (PCC pour Policy and Charging Control en anglais) comprenant les modules fonctionnels suivants :
- une module fonctionnel applicatif (i.e. module AF pour Application Function en anglais) sur le trajet des messages SIP. Ce module est habituellement hébergé par le serveur proxy CSCF de l'architecture IMS et requiert des ressources auprès d'un autre module PCRF (d'après le standard 3GPP), par exemple au moyen d'une interface RACS selon la norme TISPAN.
- un module fonctionnel de règle de politique et de charge (i.e. module PCRF pour Policy and Charging Rule Function en anglais dans le standard 3GPP). Dans l'architecture TISPAN, ce module peut correspondre à un sous-système de contrôle de ressource et d'admission (RACS) qui aurait une connaissance de la topologie du réseau et des règles de politique d'allocation de ressources (fonctionnalité de décision de politique de service, SPDF en anglais) et peut communiquer avec un ensemble de serveurs de contrôle d'admission (RACF pour Ressource and Admission Control Function en anglais) organisés selon la topologie du réseau sous-jacent.

Par exemple, cet ensemble de serveurs de contrôle peut être organisé hiérarchiquement selon la topologie ramifiée typique des réseaux de distribution énergétiques.
- un module fonctionnel d'exécution de politique et de charge (i.e. module PCEF pour Policy and Charging Enforcement Function en anglais). Un tel module PCEF peut être contrôlé par le module PCRF au moyen d'une interface Gx.
- dans l'architecture TISPAN, un module fonctionnel d'exécution du contrôle de ressources (i.e. module RCEF pour Ressource Control Enforcement Function en anglais). Un tel module RCEF peut être contrôlé par un module RACF au moyen d'une interface Re.

Dans la spécification 3GPP Release 9, ces fonctionnalités réseau sont définies spécifiquement pour gérer l'attribution de ressources d'un réseau de télécommunications, comme par exemple la bande passante. En particulier, la sémantique utilisée par les interfaces Rx, Gq', Rx et Re ne vise que la gestion de la bande passante.

La présente invention cherche à utiliser ces mécanismes propres à l'architecture IMS pour gérer l'attribution de ressources énergétiques pour lesquels ils ne sont pas prévu initialement, car l'architecture IMS n'a pas été conçue pour gérer un réseau de distribution énergétique sous-jacent.

Pour ce faire, la passerelle de réseau modifiée selon la présente invention encapsule ses besoins en transmission de puissance électrique dans le message SIP adapté à ce but et envoyé par la passerelle de gestion ONG.

Dans un mode particulier de réalisation, la passerelle de gestion ONG établit une session SIP pour la durée de sa connexion au réseau électrique. Pour ce faire, la passerelle de gestion ONG encapsule une requête en transmission de puissance électrique au sein du message de lancement de session, au moyen d'une syntaxe appropriée (e.g. dans le cas d'un SDP utilisant un paramètre spécifique pour de la puissance électrique active ou réactive, une estimation de l'énergie totale requise durant la session de recharge).

Comme un tel message transite par le réseau d'origine du véhicule, ce réseau d'origine peut vérifier l'autorisation de la passerelle de réseau modifiée d'utiliser les ressources requises, d'implémenter des mécanismes de priorité et peut décider d'abaisser les paramètres désirés, par exemple de réduire le courant de recharge maximum. Pour ce faire, les mécanismes de négociation offerts par le protocole SIP peuvent être employés, comme par exemple le mécanisme d'offre et de demande SDP (RFC 3264) ou d'autres mécanismes équivalents.

Cependant, le fait que l'autorisation d'utiliser une ressource soit donnée par le réseau d'origine du véhicule électrique ou par un processus au niveau applicatif ne signifie pas forcément que le réseau soit capable de fournir une telle ressource.

Ainsi dans un mode de réalisation avantageux, le fait de faire transiter par un module fonctionnel application AF les messages SIP échangés entre la passerelle de réseau modifiée et le réseau permet de tirer profit du sous-système de contrôle de politique et de charge PCC.

Comme indiqué ci-avant, la sémantique habituellement utilisée par les interfaces Rx, Gq', Rx et Re ne vise que la gestion de la bande passante. Dans un mode particulier de réalisation, ces interfaces utilisent une sémantique adaptée pour les besoins d'un réseau énergétique de façon à remplacer la notion de bande passante par la notion de puissance électrique. Avec une telle sémantique, tous les mécanismes actuellement définis pour des réseaux de communication avec architecture IMS sont disponibles pour répondre aux besoins d'admission et de contrôle de charge sur un réseau de distribution énergétique.

Ainsi, dans un mode particulier de réalisation, la station de recharge agit comme un élément d'exécution d'une politique énergétique, par exemple en limitant le courant et/ou la durée de la session de recharge. Dans un exemple illustratif, une ferme éolienne située à une interconnexion avec le réseau électrique se comporte comme un module PCEF de fourniture énergétique habilité et se connecte et/ou se déconnecte en fonction de requêtes émises par le module PCRF.

Dans un mode de réalisation avantageux, un module SPDF adapté à la gestion énergétique et un module RACF adapté à la gestion énergétique modélisent la topologie et la capacité maximale du réseau énergétique au lieu de modéliser la topologie et la capacité maximale de liens dans un réseau de télécommunications.

La différence entre un tel module RACF destiné à la gestion électrique et un module RACF classique destiné aux télécommunications est que les bandes passantes en émission et en réception sont complètement séparées ou s'additionnent sur des liens de télécommunications, tandis qu'elles se compensent dans le cas d'un réseau électrique. Une telle différence est purement interne à l'implémentation du module RACF et s'accorde avec l'architecture IMS et les sous-systèmes de contrôle de politique et de charge PCC associés.

Dans un mode de réalisation particulier, un module RACS adapté à la gestion énergétique est configuré avec la topologie et un modèle de capacité associé au réseau de distribution électrique.

Ce module RACS est avantageusement configuré avec des requêtes d'admission pré-délivrance correspondant à des estimations de consommation d'utilisateurs autorisés ou parrainés. Il peut être mis à jour dynamiquement avec des requêtes d'admission modifiées résultant d'un délestage de puissance ou d'autres schémas de gestion de demande.

Tous les autres consommateurs, tels que les véhicules rechargeables ou les producteurs comme les fermes éoliennes, sont sujets aux règles énergétiques implémentées par un tel module RACS adapté à la gestion énergétique.

En particulier, à des niveaux critiques de charge préconfigurés, le module RACS peut déclencher des alarmes locales ou globales ayant un impact sur des requêtes d'admission existantes ou déclencher des mécanismes externes de délestage de puissance. Par exemple, les véhicules rechargeables peuvent avoir des tarifs réduits pour l'utilisation de recharge à long terme impactée par le délestage de puissance.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

1. Procédé de gestion d'un objet (OBJ) par une passerelle de gestion (ONG) communiquant avec une architecture système présente sur un réseau de télécommunications offrant des fonctionnalités d'enregistrement d'objets, de routage de messages et une sémantique de gestion de la bande passante, le procédé comportant l'enregistrement (201) de l'objet auprès de l'architecture système par l'intermédiaire de la passerelle de gestion, en utilisant ladite fonctionnalité d'enregistrement, et le contrôle (203) d'une ressource énergétique délivrée et/ou reçue par l'objet au moyen de ladite passerelle de gestion, en utilisant ladite fonctionnalité de routage de messages, ledit procédé étant **caractérisé en ce qu'**il remplace la bande passante par ladite ressource énergétique dans la sémantique de gestion de la bande passante.

2. Procédé de gestion selon la revendication 1, **caractérisé en ce que** l'enregistrement de l'objet est effectué au moyen d'un identifiant comprenant un identificateur unique au sein d'un domaine, et un identificateur de domaine globalement unique.

3. Procédé de gestion selon l'une des revendications 1 ou 2, dans lequel le réseau de télécommunications offre en outre une fonctionnalité de contrôle d'admission, le procédé étant **caractérisé en ce que** le contrôle du paramètre associé à l'objet utilise en outre ladite fonctionnalité de contrôle d'admission.

4. Procédé de gestion selon l'une quelconque des revendications 1 à 3, dans lequel le réseau de télécommunications offre en outre une fonctionnalité d'authentification, le procédé étant **caractérisé en ce que** l'enregistrement de l'objet auprès de l'architecture système utilise en outre ladite fonctionnalité d'authentification.

5. Procédé de gestion selon l'une quelconque des revendications 1 à 4, dans lequel le réseau de télécommunications offre en outre une fonctionnalité d'itinérance, le procédé étant **caractérisé en ce que** le contrôle du paramètre associé à l'objet utilise en outre ladite fonctionnalité d'itinérance.

6. Procédé de gestion selon l'une des revendications 1 à 5, dans lequel l'objet est un véhicule électrique, **caractérisé en ce que** la passerelle de gestion est installée dans ledit véhicule électrique et **en ce que** la passerelle de gestion est agencée pour coopérer avec une station de recharge électrique afin de gérer l'alimentation électrique dudit véhicule électrique.

7. Procédé de gestion selon l'une des revendication 1 à 6, dans lequel l'objet est un véhicule électrique, **caractérisé en ce que** la passerelle de gestion est installée dans une station de charge et agencée pour gérer l'alimentation électrique dudit véhicule électrique au moyen de la station de charge.

8. Procédé de gestion selon l'une des revendications précédentes, **caractérisé en ce que** le réseau de télécommunications présente une architecture système IMS.

9. Procédé de gestion selon la revendication 8, **caractérisé par** la transmission d'au moins une donnée reçue de l'objet enregistré vers l'architecture système présente sur le réseau de télécommunications au moyen du protocole SIP.

10. Procédé de gestion selon la revendication 9, **caractérisé en ce que** la donnée reçue de l'objet est encapsulée dans le champ de données et/ou dans l'entête d'une trame organisée selon le protocole SIP.

11. Procédé de gestion selon la revendication 9 ou 10, **caractérisé en ce que** la donnée reçue de l'objet à gérer est indicative d'un besoin en alimentation électrique.

12. Procédé de gestion selon l'une des revendications précédentes, **caractérisé en ce qu'**il comporte l'envoi par la passerelle de gestion d'un message de signalisation d'un besoin énergétique à un sous-système de contrôle d'admission énergétique.

13. Procédé de gestion selon l'une des revendications précédentes, **caractérisé en ce que** la passerelle de gestion est agencée pour limiter la ressource énergétique délivrée en fonction d'une politique énergétique prédéfinie.

14. Procédé de gestion selon l'une des revendications 1 à 13, **caractérisé en ce qu'**une donnée reçue du dispositif enregistré est traduite d'un premier protocole vers un deuxième protocole avant d'être transmise vers le réseau de télécommunications.

15. Passerelle de gestion (ONG) d'un objet (OBJ) comprenant un module d'interface physique (111₁) apte à communiquer avec le objet et un module d'interface réseau (105) apte à communiquer avec une architecture système présente sur un réseau de télécommunications, **caractérisé en ce que** ladite passerelle de gestion (ONG) est apte à mettre en oeuvre le procédé de gestion d'un objet selon l'une des revendications précédente.

## Patentansprüche

1. Verfahren zum Verwalten eines Objekts (OBJ) über einen Verwaltungs-Gateway (ONG), der mit einer in einem Telekommunikationsnetz vorhandenen Systemarchitektur kommuniziert, die Funktionalitäten zum Registrieren von Objekten, zum Routen von Nachrichten und eine Semantik zum Verwalten der Bandbreite bietet, wobei das Verfahren das Registrieren (201) des Objekts bei der Systemarchitektur mithilfe des Verwaltungs-Gateways unter Verwendung der Registrierfunktionalität, und das Steuern (203) einer von dem Objekt mittels dem Verwaltungs-Gateway bereitgestellten und/oder empfangenen Energieressource unter Verwendung der Nachrichtenrouting-Funktionalität umfasst, wobei das Verfahren **dadurch gekennzeichnet ist, dass** es in der Semantik zur Verwaltung der Bandbreite die Bandbreite durch die Energieressource ersetzt.

2. Verwaltungsverfahren nach Anspruch 1, **dadurch gekennzeichnet, dass** das Registrieren des Objekts mittels einer Identifizierung erfolgt, die einen innerhalb einer Domäne eindeutigen Identifikator und einen global eindeutigen Domänenidentifikator umfasst.

3. Verwaltungsverfahren nach einem der Ansprüche 1 oder 2, wobei das Telekommunikationsnetz weiter eine Zugangssteuerfunktionalität bietet, wobei das Verfahren **dadurch gekennzeichnet ist, dass** die Steuerung des dem Objekt zugeordneten Parameters weiter die Zugangssteuerfunktionalität verwendet.

4. Verwaltungsverfahren nach einem der Ansprüche 1 bis 3, wobei das Telekommunikationsnetz weiter eine Authentifizierungsfunktionalität bietet, wobei das Verfahren **dadurch gekennzeichnet ist, dass** das Registrieren des Objekts bei der Systemarchitektur weiter die Authentifizierungsfunktionalität verwendet.

5. Verwaltungsverfahren nach einem der Ansprüche 1 bis 4, wobei das Telekommunikationsnetz weiter eine Roaming-Funktionalität bietet, wobei das Verfahren **dadurch gekennzeichnet ist, dass** die Steuerung des dem Objekt zugeordneten Parameters weiter die Roaming-Funktionalität verwendet.

6. Verwaltungsverfahren nach einem der Ansprüche 1 bis 5, wobei das Objekt ein Stromfahrzeug ist, **dadurch gekennzeichnet, dass** der Verwaltungs-Gateway im Stromfahrzeug installiert ist und dadurch, dass der Verwaltungs-Gateway dafür eingerichtet ist, mit einer Stromladestation zusammenzuwirken, um die Stromversorgung des Stromfahrzeugs zu verwalten.

7. Verwaltungsverfahren nach einem der Ansprüche 1 bis 6, wobei das Objekt ein Stromfahrzeug ist, **dadurch gekennzeichnet, dass** der Verwaltungs-Gateway in einer Ladestation installiert und dafür eingerichtet ist, die Stromversorgung des Stromfahrzeugs mittels der Ladestation zu verwalten.

8. Verwaltungsverfahren nach einem der vorstehenden Ansprüche, **dadurch gekennzeichnet, dass** das Telekommunikationsnetz eine IMS-Systemarchitektur aufweist.

9. Verwaltungsverfahren nach Anspruch 8, **gekennzeichnet durch** die Übertragung von mindestens einer von dem registrierten Objekt empfangenen Dateneinheit zu der im Telekommunikationsnetz vorhandenen Systemarchitektur mittels des SIP-Protokolls.

10. Verwaltungsverfahren nach Anspruch 9, **dadurch gekennzeichnet, dass** die von dem Objekt empfangene Dateneinheit im Datenfeld und/oder im Header eines nach dem SIP-Protokoll aufgebauten Frames eingekapselt ist.

11. Verwaltungsverfahren nach Anspruch 9 oder 10, **dadurch gekennzeichnet, dass** die von dem zu verwaltenden Objekt empfangene Dateneinheit einen Stromversorgungsbedarf anzeigt.

12. Verwaltungsverfahren nach einem der vorstehenden Ansprüche, **dadurch gekennzeichnet, dass** es das Senden, über den Verwaltungs-Gateway, einer Nachricht zum Signalisieren eines Energiebedarfs an ein Energie-Zugangssteuerungs-Subsystem umfasst.

13. Verwaltungsverfahren nach einem der vorstehenden Ansprüche, **dadurch gekennzeichnet, dass** der Verwaltungs-Gateway dafür eingerichtet ist, die bereitgestellte Energieressource abhängig von einer vordefinierten Energiepolitik zu begrenzen.

14. Verwaltungsverfahren nach einem der Ansprüche 1 bis 13, **dadurch gekennzeichnet, dass** eine von der registrierten Vorrichtung empfangene Dateneinheit von einem ersten Protokoll in ein zweites Protokoll übersetzt wird, bevor sie zum Telekommunikationsnetz übertragen wird.

15. Gateway (ONG) zum Verwalten eines Objekts (OBJ), umfassend ein physikalisches Schnittstellenmodul (111₁), das in der Lage ist, mit dem Objekt zu kommunizieren, und ein Netzschnittstellenmodul (105), das in der Lage ist, mit einer in einem Telekommunikationsnetz vorhandenen Systemarchitektur zu kommunizieren, **dadurch gekennzeichnet, dass** der Verwaltungs-Gateway (ONG) in der Lage ist, das Verfahren zum Verwalten eines Objekts nach einem der vorstehenden Ansprüche umzusetzen.

## Claims

1. Method for managing an object (OBJ) via a management gateway (ONG) communicating with a system architecture present in a telecommunications network offering functionalities for registering objects, routing messages and semantics for managing the bandwidth, the method involving the registration (201) of the object in the system architecture via the management gateway, using said registration functionality, and the control (203) of an energy resource delivered and/or received by the object via said management gateway, using said functionality for routing messages, said method being **characterised in that** it replaces the bandwidth with said energy resource in the semantics for managing the bandwidth.

2. Management method according to claim 1, **characterised in that** the registration of the object is carried out via an identifier comprising an identifier unique in a domain, and a globally unique domain identifier.

3. Management method according to one of claims 1 and 2, wherein the telecommunications network further offers a functionality for admission control, the method being **characterised in that** the control of the parameter associated with the object further uses said functionality for admission control.

4. Management method according to any one of claims 1 to 3, wherein the telecommunications network further offers an authentication functionality, the method being **characterised in that** the registration of the object in the system architecture further uses said authentication functionality.

5. Management method according to any one of claims 1 to 4, wherein the telecommunications network further offers a roaming functionality, the method being **characterised in that** the control of the parameter associated with the object further uses said roaming functionality.

6. Management method according to one of claims 1 to 5, wherein the object is an electric vehicle, **characterised in that** the management gateway is installed in said electric vehicle and **in that** the management gateway is arranged to cooperate with an electric charging station in order to manage the supply of electric power to said electric vehicle.

7. Management method according to one of claim 1 to 6, wherein the object is an electric vehicle, **characterised in that** the management gateway is installed in a charging station and arranged to manage the supply of electric power to said electric vehicle via the charging station.

8. Management method according to one of the previous claims, **characterised in that** the telecommunications network has an IMS system architecture.

9. Management method according to claim 8, **characterised by** the transmission of at least one piece of data, received from the registered object, to the system architecture present in the telecommunications network via the SIP protocol.

10. Management method according to claim 9, **characterised in that** the piece of data received from the object is encapsulated in the data field and/or in the header of a frame organised according to the SIP protocol.

11. Management method according to claim 9 or 10, **characterised in that** the piece of data received from the object to be managed is indicative of a need for electric power.

12. Management method according to one of the previous claims, **characterised in that** it comprises the sending, by the management gateway, of a message for signalling an energy need to a subsystem for control of energy admission.

13. Management method according to one of the previous claims, **characterised in that** the management gateway is arranged to limit the energy resource delivered according to a predefined energy policy.

14. Management method according to one of claims 1 to 13, **characterised in that** a piece of data received from the registered device is translated from a first protocol to a second protocol before being transmitted to the telecommunications network.

15. Gateway (ONG) for managing an object (OBJ) comprising a physical interface module (111₁) suitable for communicating with the object and a network interface module (105) suitable for communicating with a system architecture present in a telecommunications network, **characterised in that** said management gateway (ONG) is suitable for implementing the method for managing an object according to one of the preceding claims.
